Europäisches Patentamt

European Patent Office

Office européen des brevets

(19)

Publication number: **0 297 186**

**A1**

(12) **EUROPEAN PATENT APPLICATION**

(21) Application number: 87305887.9

(22) Date of filing: 03.07.87

(51) Int. Cl.⁴ **C09D 5/18 , C08K 3/34 ,**
**C08K 3/36 , C08K 7/10**

(43) Date of publication of application:
**04.01.89 Bulletin 89/01**

(84) Designated Contracting States:
**AT BE CH DE ES FR GR IT LI LU NL SE**

(71) Applicant: **Crompton, Geoffrey**
**55 Arbour Street**
**Southport Merseyside PR8 6SQ(GB)**

(72) Inventor: **Crompton, Geoffrey**
**55 Arbour Street**
**Southport Merseyside PR8 6SQ(GB)**

(74) Representative: **Lyons, Andrew John et al**
**ROYSTONS 531 Tower Building Water Street**
**Liverpool L3 1BA(GB)**

(54) **Paint compositions.**

㊙ A paint composition contains as filler a ceramic powder or fibre and/or basalt powder or fibre and optionally a substance to render the paint intumescent on heating and/or one or more frits.

EP 0 297 186 A1

## Paint Compositions

This invention concerns paint compositions.

In view of present concern over the use of materials that burn easily and give off toxic fumes when burning, much work is going into finding materials and finishes that are resilient to heat and flames, that do not give off toxic fumes when burning and that exhibit low smoke characteristics.

The object of this invention is to provide a paint composition that may result in a finish that exhibits one or more of the above-mentioned desired properties.

According to this invention there is provided a paint composition that has a ceramic powder and/or fibre or basalt powder and/or fibre or a mixture thereof as filler and optionally a substrate to render the paint intumescent on heating and/or one or more frits.

Apart from the ceramic filler and the aforementioned optional ingredients the other ingredients of the paint can be the customary ingredients for the type of paint required. In other words the ceramic filler and the optional ingredients may be incorporated in any water or organic solvent based paints, acrylic paints, two parts paints or indeed any other paint system, particularly that has low smoke and toxic fume characteristics when flame is applied thereto.

Preferred ceramic fillers are silica, such as sold under the trade name Aerofil, and of the $Al_2O_3$ $SiO_2$ type, such as polycrystalline mullite.

The filler may be of any suitable particle size for the type of paint. For example, for a gloss paint very fine particles are desirable so as not to impair the gloss finish, whereas large particles may be used to give a coarse texture suitable for exterior as well as interior paints. Filler particle sizes for say 6 to 40 $\mu$ may be suitable to give finishes ranging from semi-gloss to coarse texture.

In the manufacture of ceramic fibres, shapes may be produced that have a head and a tail. The head called "shot" is usually discarded but can be ground to a smaller particle size for use as a filler in gloss paint.

When basalt is used, fibres are preferred and the preferred composition of the basalt fibres is as follows:

|  | % by weight |
|---|---|
| Silicon as $SiO_2$ | 42–48 |
| Aluminium as $Al_2O_3$ | 12–16 |
| Iron as $Fe_2O_3$ | 11–14 |
| Magnesium as MgO | 8–13 |
| Calcium as CaO | 9.5–12 |
| Sodium as $Na_2O$ | 1.5–5 |
| Potassium as $K_2O$ | 0.25–3 |
| Titanium as $TiO_2$ | 1.5–3.5 |

The substance to render the paint composition intumescent may be alumina trihydrate. That has the advantage of releasing water if the paint is heated, such as in a fire situation, which can prevent or at least limit the effects of fire and spread of flames.

An alternative substance for rendering the paint of the invention intumescent is sodium silicate solution, possibly cured by means of an ester such as triethylene glycol monoacetate or triethylene glycol diacetate.

Frits may be included in the paint composition for further protection against fire, since on heating the frits will fuse to form a protective layer on a substrate that is heat and fire resistant. Preferably the frits comprise a range of silicas that fuse at different temperatures, for example over the range 600-1000 degrees C, whereby successive fused protective layers may be formed as the temperature rises.

For some paint compositions of the invention a suspension agent may be desirable. An example of such an agent is talc.

It may also be advantageous to include a thickening agent in the composition of the invention, such as opalized diatomite or diatamaceous earth, typically of the following formulation:-

|  | % by weight |
|---|---|
| Titanium dioxide | 0.29 |
| Iron oxide $(Fe_2O_3)$ | 0.74 |
| Alumina | 3.15 |
| Silica | 83.90 |
| Phosphate $(P_2O_5)$ | 0.02 |
| Potassium oxide | 0.18 |
| Lime | 0.03 |
| Magnesia | 0.05 |

According to one preferred embodiment of the invention a paint composition comprises frits, ceramic powder, sodium silicate, a suspension agent, a thickening agent, a catalyst, colouring agent and a U.V. stabilizer. The catalyst may be composed of diacelate, triacetate and methylene glycol in varying proportions according to the desired cure time.

The amount of ceramic powder in the preferred embodiment may be from 7 to 10% by weight, depending on the desired texture of the paint and the amount of catalyst may be from 5 to 10% by weight.

The catalyst and other additives have the advantage of controlling the problems of synoresis or "sweating" commonly associated with sodium silicate.

A particular application of the present invention is in the coating of phenolic based substrates. Phenolic systems have been developed to replace conventional polyester G.R.P. laminates in areas where fire would be a hazard. Examples of such areas are tube trains and aircraft. Hitherto no phenolic systems equivalent for the polyester G.R.P. system gel coat has been produced. Phenolic mouldings tend to be brown and attempts to self colour the mouldings have been unsuccessful. Furthermore, conventional paint systems do not have the required adhesion or wear characteristics suitable for use on phenolic substrates.

A paint of the invention, may, however be suitable for use on phenolic substrates. That paint is based on a two part system the parts to be mixed prior to use wherein the first part comprises a branched polyester and the second part an isocyanate. The filler and optional ingredients will probably be in the first part along with other customary paint ingredients, such as pigment, solvent and flow control agent, as well as an accelerator for curing reaction between the polyester and the isocyanate.

The amount of solvent in the paint will be chosen according to the method of application of the paint. The preferred method of application is by spraying for which a viscosity of 35-40 secs. is preferred. Alternatively, the paint could be applied as a transfer coat in a moulding process. The paint can be cured by any suitable means but the preferred method is by heating say at 80-90 degrees C for about 10 minutes.

This two part paint can bond well onto phenolic substrates as well as onto many other conventional substrates, such as steel, aluminium, glass reinforced plastics, wood, hardboard and even thermoplastics with a suitable undercoat.

The paints of the invention can provide a finish that is non-slip, hard wearing and resistant to u.v. degradation. Furthermore, they may be provided in any desired colour.

The paint of the invention is believed to exhibit low burn and low-smoke characteristics for the following

EP 0 297 186 A1

reasons. When flames and/or intense heat are applied to the paint of the invention, the customary ingredients will tend to burn or degrade first leaving the filler to fuse and form a protective layer against burning of the substrate. Ceramics and basalt generally have good flame resistance and the fused layer protects the substrate from direct attack. That would prevent the spread of flame as well as burning of toxic substance released by the substrate and that could provide greater time for escape from a fire situation. Indeed, the extent of protection afforded by the fused coating may only be limited by the decomposition/ignition/melting temperature of the substrate. Furthermore, the fused layer left behind can protect against weathering e.g. against corrosion of the substrate.

The effects of aluminia trihydrate or sodium silicate and particularly of the frits will also contribute to fire retardancy, when present.

Instead of its fire retardant properties etc. the paints of the invention may be used deliberately to form a protective layer, especially against corrosion of metal substrates. For that, a paint composition that flashes off in a substantially even manner is desirable, such as acrylic based paint. Thus the paint is applied to the substrate to be protected and burnt off to leave a fused coating. This may be particularly useful for metal parts that have to operate at high temperatures and for which corrosion protection is desirable.

This invention will now be further described by means of the following Examples.

EXAMPLE 1

A paint was made in two parts from the following ingredients:

Part A

Branched polyester (65% solids)
Titanium dioxide
Ethylglycol acetate
Aromatic hydrocarbon
10% Solution of Accelerator
Flow control agent
Ceramic powder (polycrystalline mullite - mainly $Al_2O_3/SiO_2$) up to 60% by volume of Part A

Part B

Aliphatic isocyanate (75% solids).

The two parts of the paint were kept apart until needed. Then 5 parts of A was mixed with 4 parts by weight of B and the mixture thinned with 4 parts of solvent to a viscosity of 35 to 40 secs. The thinned mixture was then sprayed onto a substrate using a ford cup No. 4 and left for 10 minutes to allow solvent to evaporate after which curing was completed by heating for 10 minutes at 80-90 degrees C.

The resultant finish on the substrate was flame resistant for over 30 minutes.

Example 2

A paint composition was made from the following ingredients in the amounts given
Frits 20% by weight
Ceramic powder 10% by weight
Diatomaceous earth 10% by weight
Sodium silicate solution 49% by weight
Catalyst 10% by weight

4

Colouring (U.V. Stabiliser) 1% by weight

A catalyst was a mixture of triacetate, diacetate and methylene glycol.

The paint so formulated did not burn away under fire test and protected a substrate by intumescence, by the progressive melt characteristics of the frits and by the insulative properties of the ceramic powder.

Example 3

A paint composition was made from the following ingredients in the amounts given:

Frits 20% by weight
Ceramic powder 7% by weight
Diatomaceous earth 10% by weight
Sodium silicate solution 49% by weight
Catalyst 5% by weight
Colouring/U.V. stabiliser 1% by weight
Water soluble polyvinyl chloride 8% by weight

Again the catalyst was composed of diacetate, triacetate and methylene glycol. The polyvinyl chloride acts as a binder to improve application characteristics.

The paint so formulated has more or less the same properties as that of Example 2 except for a small amount of smoke emission due to the polyvinyl chloride.

**Claims**

1. A paint composition that has a ceramic powder and/or powder fibre or basalt powder and/or fibre or a mixture thereof as filler.

2. A composition as claimed in claim 1 further comprising a substance to render the paint intumescent.

3. A composition as claimed in claim 1 or claim 2 further comprising one or more frits.

4. A composition as claimed in claim 1, 2 or 3 wherein the ceramic filler is silica or of the $Al_2O_3 \cdot SiO_2$ type.

5. A composition as claimed in any one of claims 1 to 4, wherein the basalt has the following compositions:

|  | % by weight |
|---|---|
| Silicon as $SiO_2$ | 42-48 |
| Aluminium as $Al_2O_3$ | 12-16 |
| Iron as $Fe_2O_3$ | 11-14 |
| Magnesium as Mg O | 8-13 |
| Calcium as Ca O | 9.5-12 |
| Sodium as $Na_2O$ | 1.5-5 |
| Potassium as $K_2O$ | 0.25-3 |
| Titanium as $TiO_2$ | 1.5-3.5 |

6. A composition as claimed in any one of claims 2 to 5 wherein the substance to render the paint intumescent is alumina trihydrate or sodium silicate.

7. A composition as claimed in any one of claims 3 to 6, wherein the frits comprise a range of silicas that fuse at different temperatures.

8. A composition as claimed in claim 7, wherein the frits fuse over the range 600-1000 degrees C.

9. A composition as claimed in any one of claims 1 to 8, wherein the filler has a particle size of from 6 to 40.

10. A composition as claimed in any one of claims 1 to 9 further comprising a thickening agent, such as opalized diatomite or diatomaceous earth.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | CHEMICAL ABSTRACTS, vol. 95, no. 2, 13th July 1981, page 284, abstract no. 11635y, Columbus, Ohio, US; & HU-A-18 337 (T. KENDERI) 28-06-1980 * Abstract * | 1 | C 09 D 5/18 C 08 K 3/34 C 08 K 3/36 C 08 K 7/10 |
| X | CHEMICAL ABSTRACTS, vol. 87, no. 2, 11th July 1977, page 96, abstract no. 7652u, Columbus, Ohio, US; & JP-A-77 32 025 (NISSAN CHEMICAL INDUSTRIES, LTD) 10-03-1977 * Abstract * | 1 | |
| X | CHEMICAL ABSTRACTS, vol. 105, no. 6, 11th August 1986, page 103, abstract no. 44834r, Columbus, Ohio, US; & JP-A-61 40 381 (HITACHI CABLE, LTD) 26-02-1986 * Abstract * | 1 | |
| X | FR-A-2 353 624 (BATTELLE MEMORIAL INSTITUTE) * Page 2, line 19; claim 1 * | 1 | TECHNICAL FIELDS SEARCHED (Int. Cl.4) C 09 D C 08 K |
| X | US-A-3 585 052 (J.F. DANNEWALD et al.) * Claim 1 * | 1 | |
| X | FR-A-2 003 288 (WASAG-CHEMIE AG) * Claim 1 * | 1 | |
| A | CHEMICAL ABSTRACTS, vol. 94, no. 6, 9th February 1981, page 94, abstract no. 32362b, Columbus, Ohio, US; & JP-A-80 118 980 (NAGATA, NOBUYOSHI) 12-09-1980 * Abstract * -/- | 1 | |

The present search report has been drawn up for all claims

| Place of search | Date of completion of the search | Examiner |
|---|---|---|
| THE HAGUE | 26-02-1988 | VON KUZENKO M.T. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

European Patent
Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| A | CHEMICAL ABSTRACTS, vol. 101, no. 20, 12th November 1984, page 98, abstract no. 173144g, Columbus, Ohio, US; & JP-A-59 77 870 (FUJIKURA CABLE WORKS, LTD) 04-05-1984 * Abstract * | 1 | |
| A | CHEMICAL ABSTRACTS, vol. 106, no. 14, 6th April 1987, page 86, abstract no. 103876b, Columbus, Ohio, US; & JP-A-61 163 973 (HITACHI CABLE, LTD) 24-07-1986 * Abstract * | | |
| | | | TECHNICAL FIELDS SEARCHED (Int. Cl.4) |

The present search report has been drawn up for all claims

| Place of search | Date of completion of the search | Examiner |
|---|---|---|
| THE HAGUE | 26-02-1988 | VON KUZENKO M.T. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
 
& : member of the same patent family, corresponding document

EPO FORM 1503 03.82 (P0401)